# EUROPEAN PATENT APPLICATION

(11) **EP 2 485 352 A1**
(43) Date of publication of application: **08.08.2012**
(21) Application number: 11400012.8
(22) Date of filing: 04.02.2011
(51) Int. Cl.: H02G 3/32, F16L 3/12

(54) **Installation system for cables or lines**

(71) Applicant: Eurocopter Deutschland GmbH, 86609 Donauwörth (DE)
(72) Inventor: Renner, Uwe, 86316 Friedberg (DE); Hertle, Rainer, 86733 Alerheim (DE)
(74) Representative: Pouillot, Laurent Pierre Paul

(57) **Abstract**

The invention is related to an installation system for cables or lines (11), particularly of electric cables or lines of an aircraft with a base module (1, 20, 30, 40, 50, 60, 70, 80) having an attachment contact surface (5) and at least one attachment hole (9) and wherein said base module (1, 20, 30, 40, 50, 60, 70, 80) is provided with first connection means (2, 21, 22, 31, 41, 51, 52, 62, 64), at least one clamping bolt (10) for fixing the base module (1, 20, 30, 40, 50, 60, 70, 80) by means of the at least one attachment hole (9) in a carcase cell reinforcement structure (3) and at least one function module (4) to hold the cables or lines (11). A plastic clip (6, 26, 36, 46, 56a, 66, 77, 87) is provided to releasable fasten said at least one function module (4) to the base module (1, 20, 30, 40, 50, 60, 70, 80), said plastic clip (6, 26, 36, 46, 56, 56a, 66, 77, 87) being provided with second connection means (7, 25, 27, 35, 45, 55, 67, 75) that are compatible to said first connection means (2, 21, 22, 31, 41, 51, 52, 62, 64).

## Description

The invention is related to an installation system for cables or lines with the features of the preamble of claim 1.

Cable clips are frequently used to hold one or more cables in a wanted position in aircrafts.

The document EP 0446683 A2 discloses a holder for an electrical power line, consisting of a plurality of individual cables, in an aircraft, the holder being constructed as a plastic disc provided with edge recesses, and the edge recesses in each case being covered by lugs running in the circumferential direction in such a manner that they fix the lines by means of pretensioning. In this case, it is advantageous that the space requirement for the electrical lines in the region of the power line and of the energising line is reduced.

The document DE 102004011184 A1 discloses a holder with a main body and a stirrup, which is supported by one of its ends in a hinge on the main body and by rotating relative to the basic body can be brought into a fixture position, in which its other ends is snap-fitted into the basic body for fixing the stirrup on to the main body.

The document DE 102007060030 A1 discloses a device for supporting systems, for example an electric cable or a fluid-carrying pipe, on a structure of an aircraft or space craft, and to an aircraft or space craft with such a device. The device has a basic bracket arrangement which can be fastened to at least one predetermined fastening section of the structure, and also has at least one system bracket for supporting the systems. The at least one system bracket can be fastened to the basic bracket arrangement locationally variable with respect to the fastening section. A route of said system can be flexibly varied even during the equipment assembly.

The document DE 102006053966 A1 discloses a holder with a base module and a function module fastened to the base module, where the base module has an attachment contact surface with an attachment hole and a locking device surface. The attachment contact surface and the locking device surface include an angle between 10 and 170 degrees. A clamping bolt is attached for fixing the holder in a borehole in a carcase cell reinforcement structure of an aircraft in the hole. The function module is lockable at the base module in two positions that are rotated to each other around 90 degrees.

It is an object of the invention to provide an installation system for cables or lines in aircrafts that allows more varying combinations of cable clips to hold one or more cables in wanted positions with few different elements.

A solution is provided with an installation system for cables or lines in aircrafts with the features according to claim 1.

According to the invention a modular installation system for cables or lines, particularly of electric cables or lines of an aircraft comprises a base module having an attachment contact surface towards a carcase cell reinforcement structure and at least one attachment hole and wherein said base module is provided with first connection means. At least one clamping bolt fixes the base module by means of the at least one attachment hole in the carcase cell reinforcement structure. At least one function module is provided to hold the cables or lines. A plastic clip fastens said at least one function module releasable to the base module, said plastic clip being provided with second connection means that are compatible for interaction with said first connection means. The inventive modular installation system allows varying combinations to hold cables or lines at high flexibility. The base modules and the plastic clips of the inventive modular installation system are provided with self locking couplings without need for any tools for multiple mounting or dismounting or any subsequent modifications, like new positioning and/or orientation. Any modifications can be accomplished without the need to remove the base module from the carcase cell reinforcement structure, thus facilitating such modifications considerably. The inventive modular installation system is also suitable for mounting of gaseous and liquid lines.

According to a preferred embodiment of the invention the plastic clips are provided with first connection means allowing combination of at least one further plastic clip and/or at least one function module. The plastic clips may as well be provided with alternative or supplemental retaining means for mounting of at least one function module.

According to a further preferred embodiment of the invention more than one plastic clip are mounted to the base module, said more than one plastic clip being mounted one on top of the other to allow fixation of cables or lines with more distance relative to the base module.

According to a further preferred embodiment of the invention the at least one function module is releasable fastened by retaining means to said releasable plastic clip allowing more constructive flexibility.

According to a further preferred embodiment of the invention the first connection means are formed of four central symmetrical quadrant shaped holes and said second connection means are formed of four quadrant shaped legs compatible with said four quadrant shaped holes. Preferably the four quadrant shaped legs are each provided at their ends with barbed hooks for self locking and secured coupling of the plastic clip to the base module.

According to a further preferred embodiment of the invention the first connection means at the base module are formed of a central pin and two laterally opposed walls with each a barbed hook at their ends, said barbed hooks pointing towards each other. The second connection means of the plastic module are formed of a central opening at the bottom of the plastic clip and two barbed recesses in opposed side walls of the plastic clip, said first connection means being clip snapped with said second connection means after introduction of the central opening on the central pin.

According to a further preferred embodiment of the invention the first connection means are formed of two laterally opposed walls with each a barbed hook at their ends and two laterally opposed barbed recesses in a side structure of the base module. Said second connection means are formed of two laterally opposed bottom walls pointing downward from the bottom of the plastic clip, with each of the two laterally opposed bottom walls having a barbed hook at their ends, said barbed hooks pointing towards each other. Said second connection means are having as well two barbed recesses in opposed side walls of the plastic clip, said barbed recesses in the opposed side walls of the plastic clip being compatible with said two laterally opposed walls of the first connection means and said second connection means of two laterally opposed bottom walls being compatible with said two laterally opposed barbed recesses of the first connection means in the side structure of the base module. The first connection means slip into the second connection means and vice versa for a particularly reliable coupling of the plastic clip to the base module.

According to a further preferred embodiment of the invention the first connection means are formed of a central profiled cylinder and said second connection means are formed of a circular lip inside the circumference of the plastic clip adapted to interact with the central profiled cylinder for an entirely central symmetric coupling.

According to a further preferred embodiment of the invention the central profiled cylinder is provided with two laterally opposed walls and the circumference of the plastic clip is provided with two laterally opposed notches each pointing downward to the bottom of the plastic clip and adapted to accommodate the two laterally opposed walls projecting laterally from the central profiled cylinder in order to provide a torque lock between plastic clip and base module. According to a further preferred embodiment of the invention the retaining means are formed alike the first connection means with the central profiled cylinder with a central opening and two laterally opposed walls to allow combinations of plastic clips with each other, and/or allow torque lock between the retaining means of the plastic clip and a cable clamp.

According to a further preferred embodiment of the invention the first connection means are formed of a central cylinder with four radial bosses/cams regularly distributed around the circumference of said central cylinder and said second connection means are formed of a central circular opening and four passages regularly distributed around the circumference of a casing of the plastic clip, said first connection means being compatible with said second connection means for torque lock and a symmetric coupling between base module and plastic clip.

According to a further preferred embodiment of the invention an intermediate clip is provided, said at least one function module being integrated in said plastic clip and said intermediate clip being releasable mounted between said plastic clip and the base module.

According to a further preferred embodiment of the invention the bosses are inclined towards the circumference of a top surface of the central cylinder for improved mounting of the intermediate clip to the base module or improved mounting of the plastic clip to the intermediate clip.

According to a further preferred embodiment of the invention the first connection means are formed of a central cylinder with four radial walls regularly distributed around the circumference of said central cylinder, with two opposed walls extending above the central cylinder and said second connection means are formed of a lower ring of the plastic clip with four regularly distributed inner circumferential passages allowing to axially insert said first connection means in order to withhold said first connection means inside said second connection means after rotation of the plastic clip for a twist lock coupling.

According to a further preferred embodiment of the invention the retaining means for the function module are formed with a central opening in the central cylinder for releasable fitting of the function module to the plastic clip by means of a split pin.

According to a further preferred embodiment of the invention any of the first connection means are directed rectangular with regard to the attachment contact surface of the base module to allow more orientations for the function module and/or the plastic clip.

Preferred embodiments of the invention are presented by way of the following description referring to the attached drawings.
Fig. 1 shows a 3-D view of a base module of an installation system according to the invention,
Fig. 2 shows a 3-D view of a plastic clip of the installation system according to the invention,
Fig. 3 shows a perspective view of the installation system according to the invention,
Fig. 4 shows a cross sectional view of the installation system according to the invention,
Fig. 5 shows a 3-D view of the base module of a second embodiment of the installation system according to the invention,
Fig. 6 shows a 3-D view of the plastic clip of the second embodiment of the installation system according to the invention,
Fig. 7 shows a perspective view of the second embodiment of the installation system according to the invention,
Fig. 8 shows a cross sectional view of the second embodiment of the installation system according to the invention,
Fig. 9 shows a 3-D view of the base module of a third embodiment of the installation system according to the invention,
Fig. 10 shows a 3-D view of the plastic clip of the third embodiment of the installation system according to the invention,
Fig. 11 shows a perspective view of the third embodiment of the installation system according to the invention,
Fig. 12 shows a cross sectional view of the third embodiment of the installation system according to the invention,
Fig. 13 shows a 3-D view of the base module of a fourth embodiment of the installation system according to the invention,
Fig. 14 shows a 3-D view of the plastic clip of the fourth embodiment of the installation system according to the invention,
Fig. 15 shows a perspective view of the fourth embodiment of the installation system according to the invention,
Fig. 16 shows a cross sectional view of the fourth embodiment of the installation system according to the invention,
Fig. 17 shows a 3-D view of the base module of a fifth embodiment of the installation system according to the invention,
Fig. 18 shows a 3-D view of an intermediate clip of the fifth embodiment of the installation system according to the invention,
Fig. 19 shows a 3-D view of the plastic clip of the fifth embodiment of the installation system according to the invention,
Fig. 20 shows a perspective view of the fifth embodiment of the installation system according to the invention,
Fig. 21 shows a cross sectional view of the fifth embodiment of the installation system according to the invention,
Fig. 22 shows a 3-D view of the base module of a sixth embodiment of the installation system according to the invention,
Fig. 23 shows a 3-D view of the plastic clip of the sixth embodiment of the installation system according to the invention,
Fig. 24 shows a perspective view of the sixth embodiment of the installation system according to the invention,
Fig. 25 shows a cross sectional view of the sixth embodiment of the installation system according to the invention,
Fig. 26 shows a 3-D view of the base module of a seventh embodiment of the installation system according to the invention,
Fig. 27 shows a 3-D view of an intermediate clip of the seventh embodiment of the installation system according to the invention,
Fig. 28 shows a 3-D view of the plastic clip of the seventh embodiment of the installation system according to the invention,
Fig. 29 shows a perspective view of the seventh embodiment of the installation system according to the invention,
Fig. 30 shows a cross sectional view of the seventh embodiment of the installation system according to the invention,
Fig. 31 shows a 3-D view of the base module of an eighth embodiment of the installation system according to the invention,
Fig. 32 shows a 3-D view of the intermediate clip of the eighth embodiment of the installation system according to the invention,
Fig. 33 shows a 3-D view of a plastic clip of the eighth embodiment of the installation system according to the invention,
Fig. 34 shows a perspective view of the eighth embodiment of the installation system according to the invention, and
Fig. 35 shows a cross sectional view of the eighth embodiment of the installation system according to the invention.

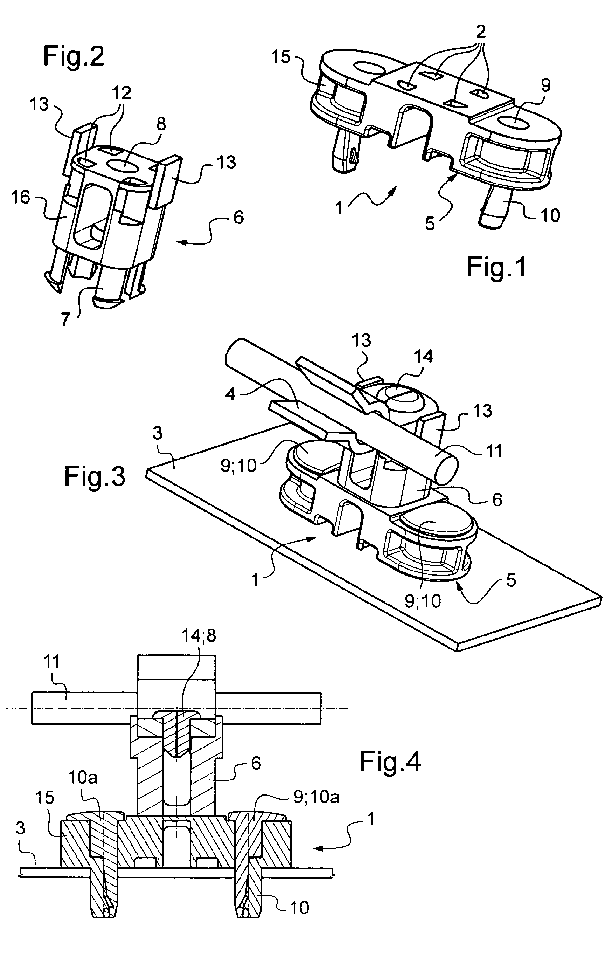

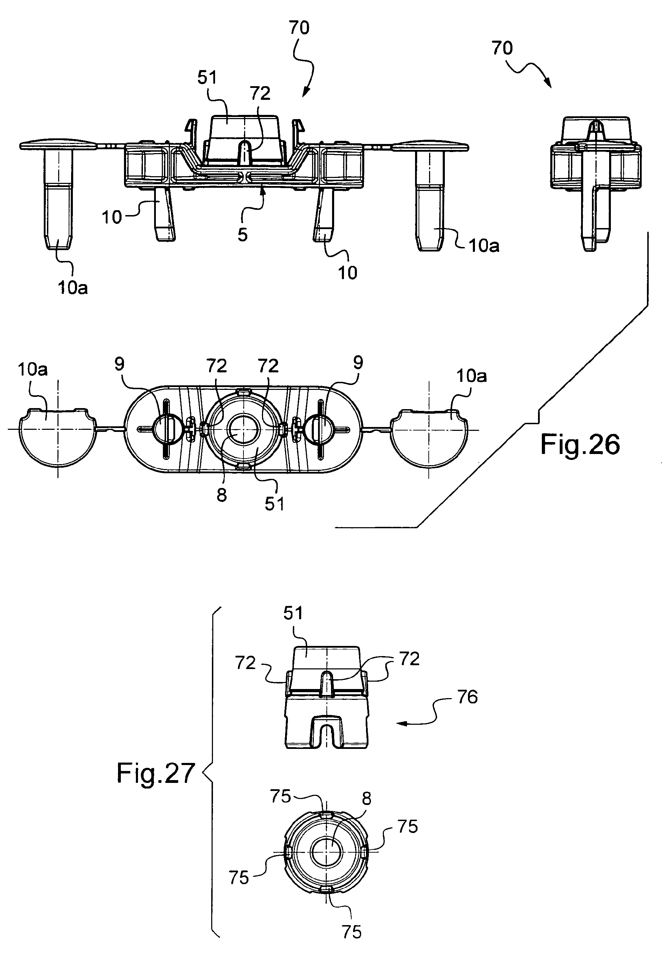

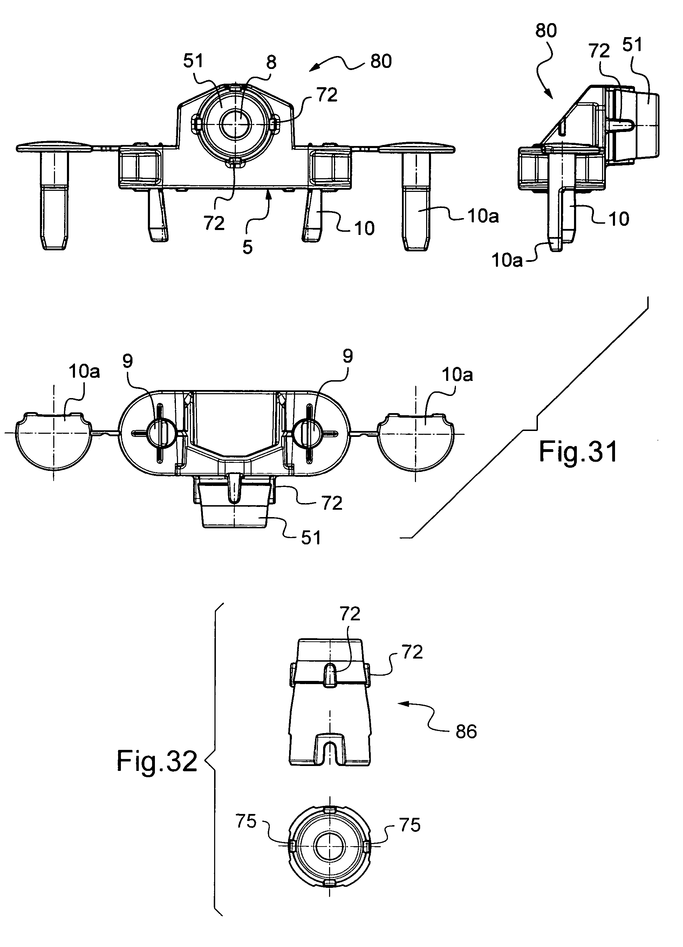

According to Fig. 1 a moulded base module 1 of a modular installation system for cables or lines, particularly of electric cables or lines of an aircraft, comprises an elongated body with a lower attachment contact surface 5 and two circular, lateral attachment holes 9 through said elongated body at opposed ends of said elongated body. Said two lateral attachment holes 9 are essentially vertical with respect to said lower attachment contact surface 5. Respective parts of two clamping bolts 10 are moulded to the lower attachment contact surface 5 to extent at an approximately right angle from said lower attachment contact surface 5. Each of the two clamping bolts 10 is eccentrically obstructing a part of one of the respective lateral attachment holes 9 at said lower attachment contact surface 5 and the obstruction is continuously increasing along the extension of each of said two clamping bolts 10. The two clamping bolts 10 are supposed to be inserted into a carcase cell reinforcement structure 3 (see Fig. 3, 4) of an aircraft. Two complements 10a to the parts of respective clamping bolts 10 are also provided for insertion into the respective lateral attachment holes 9 alongside said respective clamping bolts 10. Said two complements 10a may be moulded externally to the elongated body 4 of the base module 1 (see Fig. 26, 31). The respective diameters of the clamping bolts 10, 10a are adapted to allow insertion of the complements 10a into the respective lateral attachment holes 9 and alongside said respective clamping bolts 10 in order to fix the base module 1 to said carcase cell reinforcement structure 3. The base module 1 and the two clamping bolts 10, 10a are made of polyamid 66. The base module 1 has an open light weight structure with ribs 15 for improved stiffness.

Said elongated body of the base module 1 is provided in its middle upside with central symmetrical first connection means formed of four separate quadrant shaped holes 2.

According to Fig. 2 corresponding features are referred to with the references of Fig. 1. A plastic clip 6 of the modular installation system with an essentially cylindrical to quadratic cross section is provided on its bottom side with central symmetrical second connection means formed of four quadrant shaped legs 7 each with an outwardly pointing barbed hook at its end. Said four quadrant shaped legs 7 of the second connection means are adapted to snugly snap fit into the four quadrant shaped holes 2 of the first connection means with the legs 7 of the second connection means being then orientated in about the same direction as the clamping bolts 10, 10a.

The opposed top side of the plastic clip 6 comprises retaining means 8 formed as a central opening. Said opposite side of the plastic clip 6 comprises as well the equivalence of the first connection means 12 formed of four quadrant shaped holes 2 corresponding to the central symmetrical first connection means of the base module 1 to optionally receive coaxially a further plastic clip 6 with its central symmetrical second connection means of four quadrant shaped legs 7. Two opposed walls 13 are projecting from the circumference of said top side of the plastic clip 6. The plastic clip 6 is made of polyamid 66.

The plastic clip 6 is excavated and reinforced with rips 16 for low weight at high stiffness.

According to Fig. 3, 4 corresponding features are referred to with the same references as in Fig. 1, 2. The base module 1 is releasable mounted with two clamping bolts 10, 10a through its two lateral attachment holes 9 onto the carcase cell reinforcement structure 3. The spacing between the two clamping bolts 10, 10a provides for high resistance of the base module 1 against torque around its axis vertical to the attachment contact surface 5.

The plastic clip 6 is releasable mounted to the base module 1 by said second connection means 7 of the plastic clip 6 being first coaxially pushed into the compatible first connection means 2 of the base module 1 and being eventually snap fitted with each of the outwardly pointing barbed hook at the end of each of the four quadrant shaped legs 7 of the second connection means such that the plastic clip 6 can not be pulled out of the base module 1. The spacing between the four quadrant shaped legs 7 of the second connection means provides for high resistance of the plastic clip 6 against torque around its axis vertical to the attachment contact surface 5.

A function module 4 is mounted to the top of the plastic clip 6 by means of a pin 14 driven through the function module 4 into the retaining means 8. The function module 4 abuts and is blocked against rotation around the axis vertical to the attachment contact surface 5 by the two laterally projecting walls 13 of the plastic clip 6. An electric cable or line 11 of an aircraft (not shown) is pinched between two legs of the function module 4. The pin 14 is split into two halves along its central longitudinal axis.

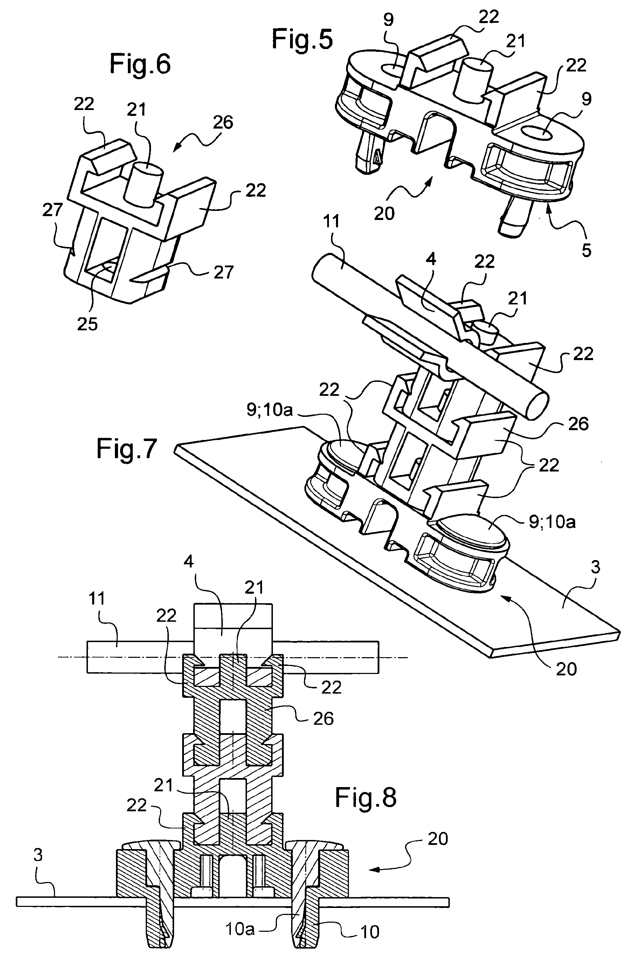

According to Fig. 5 corresponding features are referred to with the references of Fig. 1-4. A moulded base module 20 of a second embodiment of a modular installation system for cables or lines comprises an elongated body with an attachment contact surface 5 and two lateral attachment holes 9. At an upper side of the base module 1 opposed to said attachment contact surface 5 said elongated body of the base module 1 is provided in its middle with first connection means formed as a central pin 21 and symmetrical to said central pin 21 with two laterally opposed walls 22 with each a barbed hook at their ends, said barbed hooks pointing towards each other.

According to Fig. 6 corresponding features are referred to with the references of Fig. 1-5. A plastic clip 26 of the modular installation system with an essentially rectangular cross section is provided on its bottom side with central symmetrical second connection means comprising a central opening 25 and two barbed recesses 27 in opposed side walls of the plastic clip 26, said first connection means 21, 22 being compatible with said second connection means 25, 27, such that the central opening 25 at the bottom of the plastic clip 26 fits onto the central pin 21 of the base module 20 and the barbed hooks at the ends of the two laterally opposed walls 22 of the first connection means fit into the two barbed recesses 27 in the side walls of the plastic clip 26.

The opposed top side of the plastic clip 26 comprises retaining means corresponding to the central symmetrical first connection means 21, 22 of the base module 1 to optionally receive coaxially either a further plastic clip 26 with its central symmetrical second connection means 25, 27 or the function module 4.

According to Fig. 7, 8 corresponding features are referred to with the same references as in Fig. 1-6. The base module 20 is mounted with the two separate clamping bolts 10, 10a through its two lateral attachment holes 9 onto the carcase cell reinforcement structure 3.

Two plastic clips 26 are releasable mounted to the base module 20 by said second connection means 25, 27 of the lower plastic clip 26 being coaxially pushed into the compatible first connection means 21, 22 of the base module 20 to be eventually snap fitted and said second connection means 25, 27 of the upper plastic clip 26 being coaxially pushed into the compatible first connection means 21, 22 of the lower plastic clip 26.

The function module 4 is mounted to the top of the upper plastic clip 26 by means of the central pin 21 driven through an opening of the function module 4, said function module 4 being held and blocked against rotation around the axis vertical to the attachment contact surface 5 by the two opposed projecting walls 22 with each a barbed hook at their ends pointing towards each other retaining the function module 4 in the upper plastic clip 26. The electric cable or line 11 is pinched between the two legs of the function module 4.

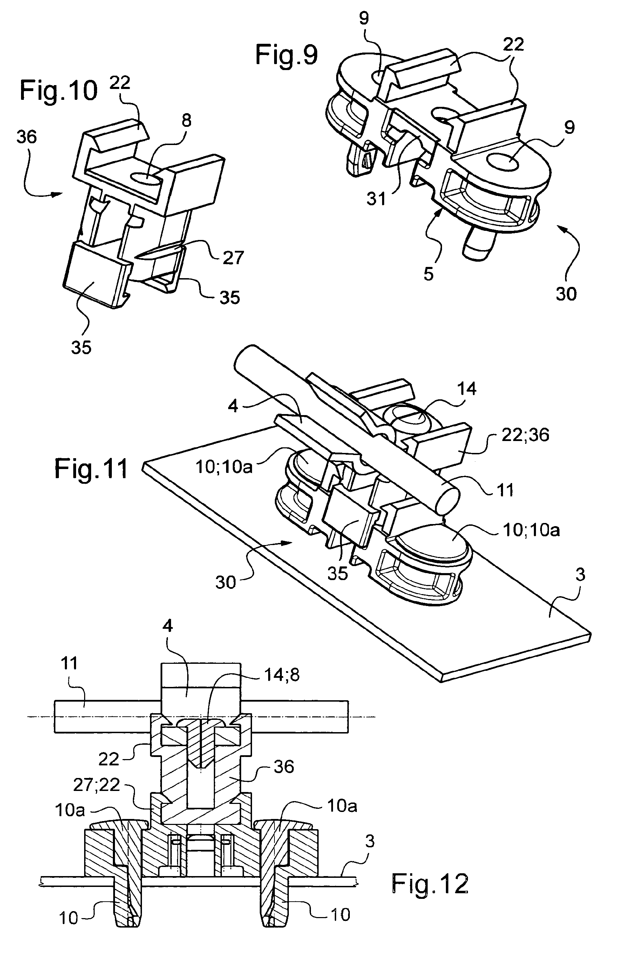

According to Fig. 9 corresponding features are referred to with the references of Fig. 1-8. A moulded base module 30 of a third embodiment of a modular installation system for cables or lines comprises an elongated body with an attachment contact surface 5 and two lateral attachment holes 9. At an upper side of the base module 30 opposed to said attachment contact surface 5 said elongated body of the base module 30 is provided in its middle with first connection means formed as two laterally opposed walls 22 with each a barbed hook at their ends, said barbed hooks pointing towards each other. The elongated body of the base module 30 is provided with two opposed lateral recesses 31 in a central section of said elongated body.

According to Fig. 10 corresponding features are referred to with the references of Fig. 1-9. A plastic clip 36 of the third embodiment of the modular installation system with an essentially rectangular cross section is provided on its bottom side with central symmetrical second connection means comprising two barbed recesses 27 in opposed side walls of the plastic clip 26, said first connection means 22 being compatible with said second connection means 27, such that the barbed hooks at the ends of the two laterally opposed walls 22 of the first connection means fit into the two barbed recesses 27 in the opposed side walls of the plastic clip 36. Two opposed bottom walls 35, with each a barbed hook at their ends pointing towards each other, project from the bottom side of the plastic clip 36 to interact with the two opposed lateral recesses 31 in the sides of the elongated body of the base module 30.

The opposed top side of the plastic clip 36 comprises retaining means formed like the central symmetrical first connection means 22 of the base module 30 and a central opening 8 to optionally receive coaxially either a further plastic clip 36 with its lateral symmetrical second connection means 27 or the function module 4 mounted with a pin 14 in said central opening 8.

According to Fig. 11, 12 corresponding features are referred to with the same references as in Fig. 1-10. The base module 30 is mounted with the two separate clamping bolts 10, 10a through its two lateral attachment holes 9 onto the carcase cell reinforcement structure 3.

The plastic clip 36 is releasable mounted to the base module 30 by said second connection means 35, 27 of the plastic clip 36 being coaxially pushed and being slid into the compatible first connection means 31, 22 of the base module 30 to be eventually snap fitted.

The function module 4 is mounted to the top of the plastic clip 36 by sliding it into the retaining means 22 of the plastic clip 36 and by means of the pin 14 driven through an opening of the function module 4 into the central opening 8 of the plastic clip 36, said function module 4 being held and blocked against rotation around the axis vertical to the attachment contact surface 5 by the two opposed projecting walls 22 with the barbed hooks at their ends pointing towards each other retaining the function module 4 in the plastic clip 36. An electric cable or line 11 is pinched between the two legs of the function module 4.

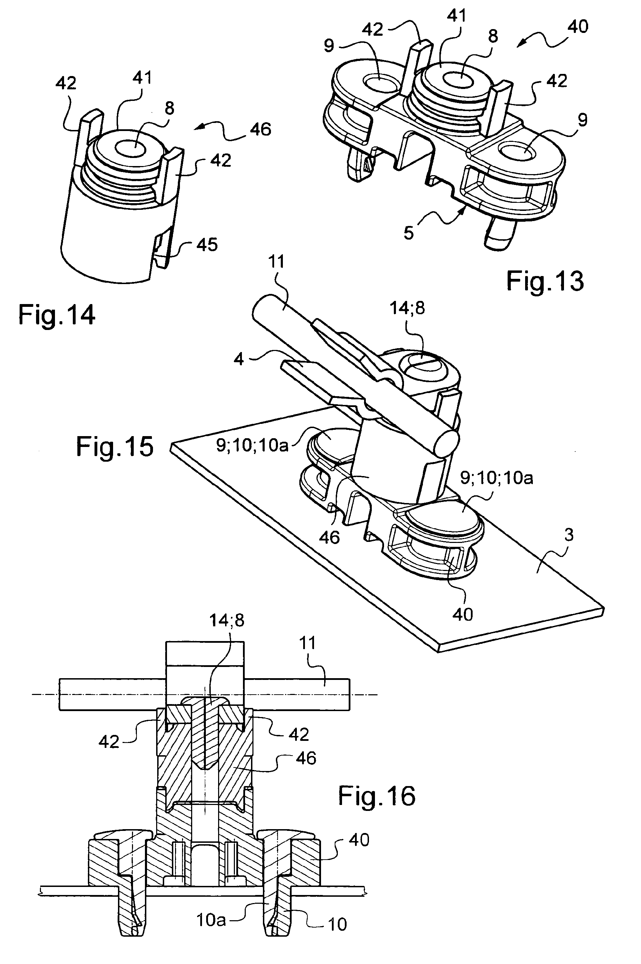

According to Fig. 13 corresponding features are referred to with the references of Fig. 1-12. A moulded base module 40 of a fourth embodiment of a modular installation system for cables or lines comprises an elongated body with an attachment contact surface 5 and two lateral attachment holes 9. At an upper side of the base module 40 opposed to said attachment contact surface 5 said elongated body of the base module 40 is provided in its middle with upwardly directing first connection means formed as a profiled cylinder 41 with a central opening 43 and two laterally opposed walls 42 at the circumference of said profiled cylinder 41 with each of said laterally opposed walls 42 having a rectangular shape.

According to Fig. 14 corresponding features are referred to with the references of Fig. 1-13. A plastic clip 46 of the fourth embodiment of the modular installation system is provided with an essentially cylindrical cross section. Said plastic clip 46 is essentially hollow with two lateral notches in its circumference extending rectangular from its bottom side. A lip 45 is projecting inwardly from the circumference of the plastic clip 46 as central symmetrical second connection means, said first connection means 41 being compatible with said second connection means 45.

The opposed top side of the plastic clip 46 comprises retaining means formed like the central symmetrical first connection means 41 of the base module 40 to optionally receive coaxially either a further plastic clip 46 with its inwardly projecting lip 45 as a second connection means 27 and a retaining means 8 conceived as a central opening 43 for the function module 4 to be mounted with a pin 14 in said central opening 43.

According to Fig. 15, 16 corresponding features are referred to with the same references as in Fig. 1-14. The base module 40 is mounted with the two separate clamping bolts 10, 10a through its two lateral attachment holes 9 onto the carcase cell reinforcement structure 3.

The plastic clip 46 is releasable mounted to the base module 40 by said second connection means 45 of the plastic clip 46 being coaxially pushed onto the compatible first connection means 41 of the base module 40 to be eventually snap fitted. The two laterally opposed walls 42 at the circumference of said profiled cylinder 41 inside the two lateral notches of the plastic clip 46 prevent the plastic clip 46 from turning relative to the base module 40.

The function module 4 is mounted to the top of the plastic clip 46 by means of the pin 14 driven through an opening of the function module 4 into the central opening 8 of the plastic clip 46, said function module 4 being held and blocked against rotation around the axis vertical to the attachment contact surface 5 by the two opposed projecting walls 42. An electric cable or line 11 is pinched between the two legs of the function module 4.

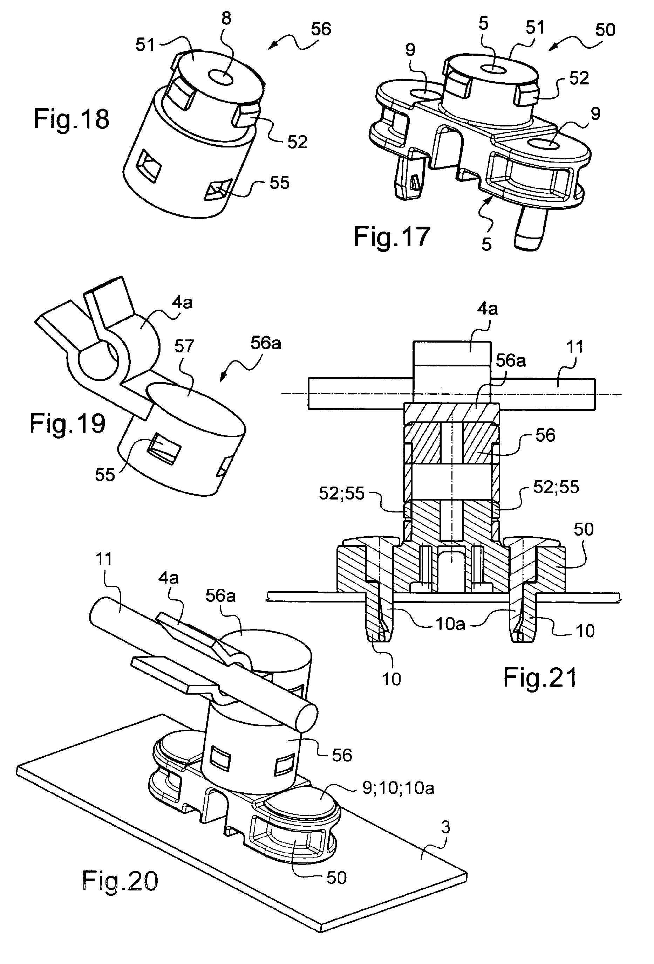

According to Fig. 17 corresponding features are referred to with the references of Fig. 1-16. A moulded base module 50 of a fifth embodiment of a modular installation system for cables or lines comprises the elongated body with the attachment contact surface 5 and the two lateral attachment holes 9. At the upper side of the base module 50 opposed to said attachment contact surface 5 said elongated body of the base module 50 is provided in its middle with upwardly directed first connection means formed as a cylinder 51 with radial projecting bosses 52 at the circumference of said cylinder 51 with each of said radial projecting bosses 52 regularly distributed along the circumference of said cylinder 51. The radial projecting bosses 52 have an essentially rectangular shape with an inclination towards the circumference of a top surface of said cylinder 51. The central opening 8 is foreseen in the top surface of said cylinder 51.

According to Fig. 18 corresponding features are referred to with the references of Fig. 1-17. An intermediate clip 56 of the fifth embodiment of the modular installation system is provided with an essentially cylindrical cross section. Said intermediate clip 56 is essentially hollow with - as the second connection means - radial openings 55 regularly distributed in its circumference along the circumference of said intermediate clip 56. Said radial openings 55 in the lower half of the intermediate clip 56 are compatible with the radial projecting bosses 52.

The opposed top side of the intermediate clip 56 comprises retaining means formed like the central symmetrical first connection means 51 of the base module 50 to optionally receive coaxially a further intermediate clip 56 with its radial openings 55 regularly distributed in its circumference as a second connection means. A central opening 8 as retaining means is provided in the top surface of said cylinder 51 of the intermediate clip 56.

According to Fig. 19 a plastic clip 56a comprises the radial openings 55 regularly distributed in its circumference as torque or twist lock as a releasable second connection means. A cover 57 is provided in the top of said plastic clip 56a with an integrated function module 4a.

According to Fig. 20, 21 corresponding features are referred to with the same references as in Fig. 1-19. The base module 50 is mounted with the two separate clamping bolts 10, 10a through its two lateral attachment holes 9 onto the carcase cell reinforcement structure 3.

The intermediate clip 56 is releasable mounted to the base module 50 by pushing the intermediate clip 56 coaxially onto the first connection means 51 compatible with said second connection means 55 to be eventually snap fitted onto the base module 50. The plastic clip 56a is mounted onto the intermediate clip 56 by pushing the plastic clip 56a coaxially onto the retaining means 51, 52 of the intermediate clip 56 compatible with said second connection means 55 to be eventually snap fitted onto the intermediate clip 56. The function module 4a is integral with the top of the plastic clip 56a. An electric cable or line 11 is pinched between the two legs of the function module 4a.

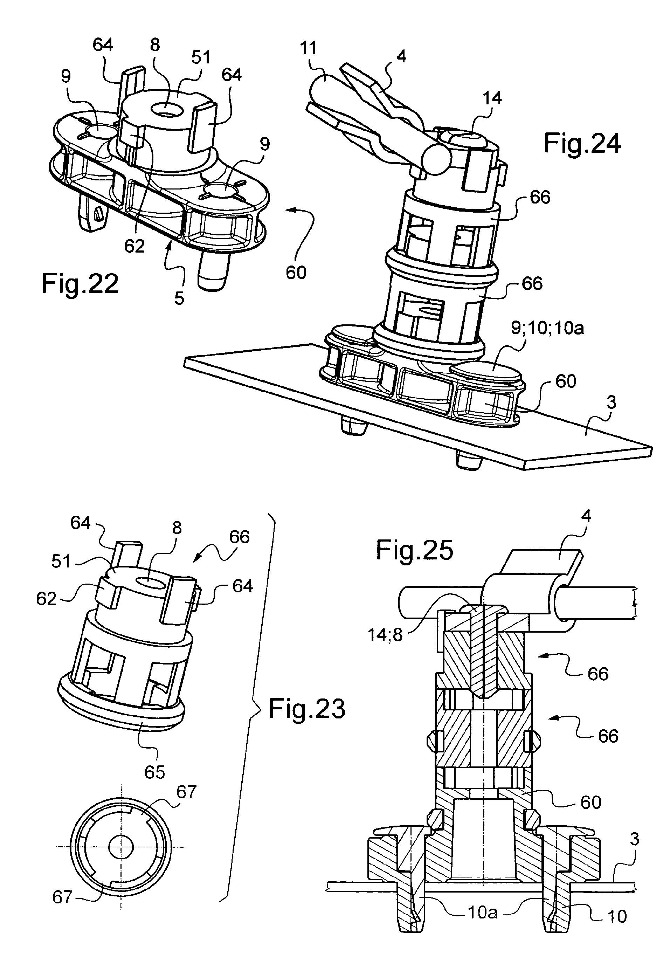

According to Fig. 22 corresponding features are referred to with the references of Fig. 1-21. A moulded base module 60 of a sixth embodiment of a modular installation system for cables or lines comprises the elongated body with the attachment contact surface 5 and the two lateral attachment holes 9. At the upper side of the base module 60 opposed to said attachment contact surface 5 said elongated body of the base module 60 is provided in its middle with upwardly directed first connection means formed as the cylinder 51 with two opposed and radial projecting bosses 62 at the circumference of said cylinder 51. Two opposed walls 64 are attached to the circumference of said cylinder 51 and emerge over the top surface of said cylinder 51. The radial projecting bosses 62 and walls 64 have an essentially rectangular shape. The central opening 8 is foreseen in the top surface of said cylinder 51 of the base module 60.

According to Fig. 23 corresponding features are referred to with the references of Fig. 1-22. A plastic clip 66 of the sixth embodiment of the modular installation system is provided with an essentially cylindrical cross section with a lower ring 65. Said plastic clip 66 is essentially hollow with - as the second connection means ― four or two opposed radial passages 67. Said radial passages 55 from the bottom of the plastic clip 66 are compatible with the two radial projecting bosses 62/walls 64.

The opposed top side of the plastic clip 56 comprises retaining means formed like the central symmetrical first connection means 62, 64 of the base module 60 to optionally receive coaxially a further plastic clip 66 with its radial passages 67 in its circumference as a second connection means. A central opening 8 is provided in the top surface of said cylinder 51.

According to Fig. 24, 25 corresponding features are referred to with the same references as in Fig. 1-23. The base module 60 is mounted with the two separate clamping bolts 10, 10a through its two lateral attachment holes 9 onto the carcase cell reinforcement structure 3.

The first plastic clip 66 is releasable mounted to the base module 60 by pushing the plastic clip 66 coaxially onto the first connection means 51 compatible with said second connection means 67 to be fitted onto the base module 60. A second plastic clip 66 is mounted onto the first plastic clip 66 by pushing the second plastic clip 66 coaxially onto the retaining means 8 of the first plastic clip 56 compatible with said second connection means 67 to be fitted onto the first plastic clip 66. The function module 4 is mounted to the top of the second plastic clip 66 by means of the pin 14 driven through an opening of the function module 4 into the central opening 8 of the plastic clip 66, said function module 4 being held and blocked against rotation around the axis vertical to the attachment contact surface 5 by the two opposed projecting walls 64 of plastic clip 66. An electric cable or line 11 is pinched between the two legs of the function module 4a.

According to Fig. 26 corresponding features are referred to with the references of Fig. 1-25. A moulded base module 70 of a seventh embodiment of a modular installation system for cables or lines comprises the elongated body with the attachment contact surface 5 and the two lateral attachment holes 9. At the upper side of the base module 70 opposed to said attachment contact surface 5 said elongated body of the base module 70 is provided in its middle with upwardly directed first connection means formed as the cylinder 51 with four radial projecting extensions 72 regularly distributed along the circumference of said cylinder 51. Two complements 10a are moulded to the elongated body of the base module 70. The central opening 8 is foreseen in the top surface of said cylinder 51.

According to Fig. 27 corresponding features are referred to with the references of Fig. 1-22. An intermediate clip 76 of the seventh embodiment of the modular installation system is provided with an essentially cylindrical cross section with four lower recesses 75 - as the second connection. Said intermediate clip 76 is essentially hollow. Said lower recesses 75 from the bottom of the intermediate clip 76 are compatible with the four radial projecting extensions 72.

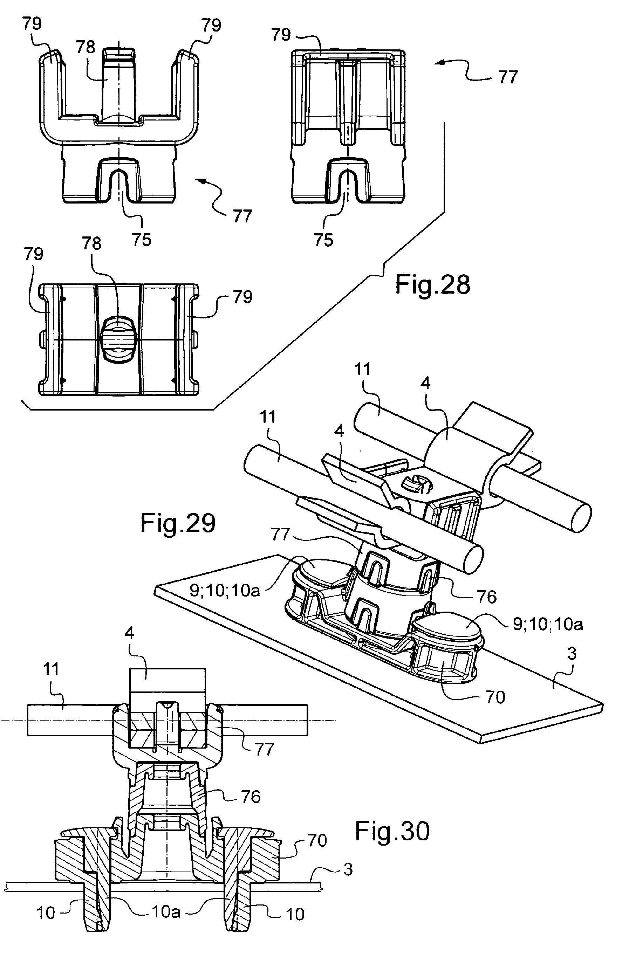

The opposed top side of the intermediate clip 76 comprises retaining means formed like the central symmetrical first connection means 72 of the base module 70 to optionally receive coaxially a further intermediate clip 76 or a plastic clip 77 (see Fig. 28) with its lower recesses 75 in its circumference as a second connection means. A central opening 8 is provided in the top surface of said cylinder 51. The intermediate clip 76 is available with varying lengths.

According to Fig. 28 corresponding features are referred to with the references of Fig. 1-27. The plastic clip 77 of the seventh embodiment of the modular installation system is provided with a lower half with an essentially cylindrical cross section with four lower recesses 75 - as the second connection- or twist-lock means -???. Said plastic clip 77 is essentially hollow. Said lower recesses 75 from the bottom of the plastic clip 77 are compatible with the four radial projecting extensions 72 at cylinder 51.

The opposed top side of the plastic clip 77 has an essentially rectangular cross section. Central retaining means 78 are formed like a bar with barbed hooks at its free end to receive and withhold coaxially the function module 4. The plastic clip 77 and the central bar 78 are available with varying lengths to accommodate up to two function modules 4. Two opposed lateral walls 79 at the top side of the plastic clip 77 accommodate the function module(s) 4 to prevent rotation around the central bar 78.

According to Fig. 29, 30 corresponding features are referred to with the same references as in Fig. 1-28. The base module 70 is mounted with the two separate clamping bolts 10, 10a through its two lateral attachment holes 9 onto the carcase cell reinforcement structure 3.

The intermediate clip 76 is releasable mounted to the base module 70 by pushing the intermediate clip 76 coaxially onto the first connection means 51 compatible with said second connection means 75 to be fitted onto the base module 70. The plastic clip 77 is mounted onto the intermediate clip 76 by pushing the plastic clip 77 coaxially onto the retaining means 72 of the intermediate clip 76 compatible with said second connection means 75 of the plastic clip 77. Two function modules 4 are mounted from the top of the plastic clip 77 by means of the bar 78 driven through an opening of the function modules 4, said function modules 4 being held and blocked against rotation around the axis vertical to the attachment contact surface 5 by the two opposed lateral walls 79 confining laterally the function modules 4. An electric cable or line 11 is pinched between the two legs of each of the function modules 4.

According to Fig. 31 corresponding features are referred to with the references of Fig. 1-30. A moulded base module 80 of an eighth embodiment of a modular installation system for cables or lines comprises the elongated body with the attachment contact surface 5 and the two lateral attachment holes 9. At the upper side of the base module 80 said elongated body of the base module 80 is provided in its middle with first connection means directed at an angle of 90° relative to said attachment contact surface 5 and formed as the cylinder 51 with four radial projecting extensions 72 regularly distributed along the circumference of said cylinder 51. Two complements 10a are moulded to the elongated body of the base module 70. The central opening 8 is foreseen in the top surface of said cylinder 51.

According to Fig. 32 corresponding features are referred to with the references of Fig. 1-31. An intermediate clip 86 of the eighth embodiment of the modular installation system is provided with an essentially cylindrical cross section with four lower recesses 75 - as the second connection means. Said intermediate clip 86 is essentially hollow. Said lower recesses 75 from the bottom of the intermediate clip 76 are compatible with the four radial projecting extensions 72.

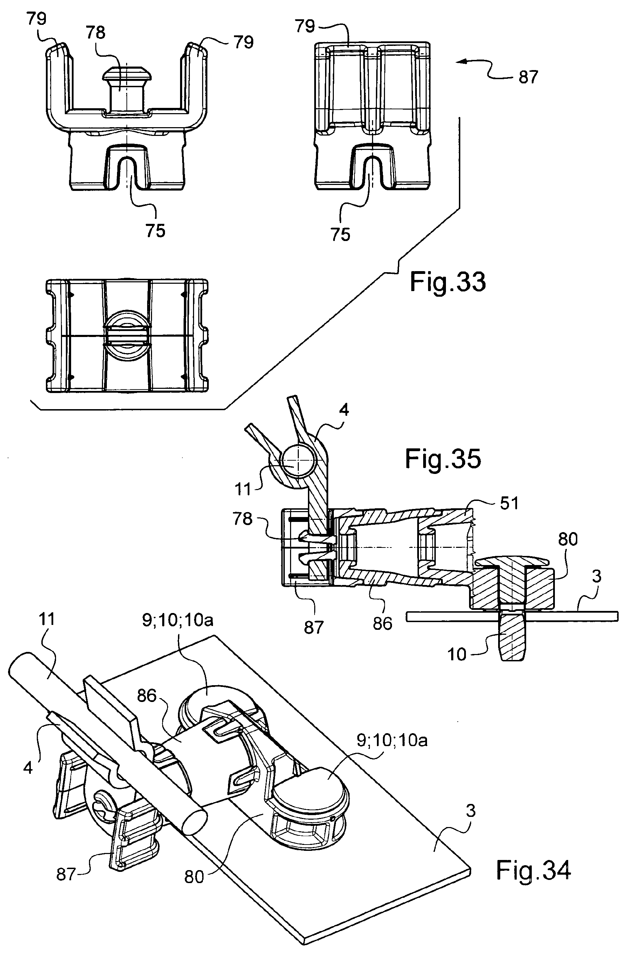

The opposed top side of the intermediate clip 86 comprises retaining means 8 formed like the central symmetrical first connection means 72 of the base module 80 to optionally receive coaxially a further intermediate clip 86 or a plastic clip 87 (see Fig. 33) with its lower recesses 75 in its circumference as a second connection means. A central opening 8 is provided in the top surface of said cylinder 51. The intermediate clip 86 is longer than the intermediate clip 76.

According to Fig. 33 corresponding features are referred to with the references of Fig. 1-32. The plastic clip 87 of the eighth embodiment of the modular installation system is provided with a lower half with an essentially cylindrical cross section with four lower recesses 75 - as the second connection means. Said plastic clip 87 is essentially hollow. Said lower recesses 75 from the bottom of the plastic clip 86 are compatible with the four radial projecting extensions 72 at cylinder 51.

The opposed top side of the plastic clip 87 has an essentially rectangular cross section. Central retaining means 78 are formed like a bar with barbed hooks at its free end to receive and withhold coaxially a function module 4. The plastic clip 87 and the central bar 78 are not longer than necessary to accommodate one function module 4. Two opposed lateral walls 79 at the top side of the plastic clip 87 accommodate the function module 4 to prevent rotation around the central bar 78.

According to Fig. 34, 35 corresponding features are referred to with the same references as in Fig. 1-33. The base module 80 is mounted with the two separate clamping bolts 10, 10a through its two lateral attachment holes 9 onto the carcase cell reinforcement structure 3.

The intermediate clip 86 is releasable mounted to the base module 80 by pushing the intermediate clip 86 coaxially onto the first connection means 51 compatible with said second connection means 75 to be fitted onto the base module 80. The plastic clip 87 is mounted onto the intermediate clip 86 by pushing the plastic clip 87 coaxially onto the retaining means 72 of the intermediate clip 86 compatible with said second connection means 75 of the plastic clip 87. One function module 4 is mounted from the top of the plastic clip 87 by means of the bar 78 driven through an opening of the function module 4, said function module 4 being held and blocked against rotation around the axis vertical to the attachment contact surface 5 by the two opposed lateral walls 79 confining the function module 4. An electric cable or line 11 is pinched between the two legs of the function module 4.

## Claims

1. An installation system for cables or lines (11), particularly of electric cables or lines of an aircraft with a base module (1, 20, 30, 40, 50, 60, 70, 80) having an attachment contact surface (5) and at least one attachment hole (9) and wherein said base module (1, 20, 30, 40, 50, 60, 70, 80) is provided with first connection means (2, 21, 22, 31, 41, 51, 52, 62, 64), at least one clamping bolt (10) for fixing the base module (1, 20, 30, 40, 50, 60, 70, 80) by means of the at least one attachment hole (9) in a carcase cell reinforcement structure (3) and at least one function module (4) to hold the cables or lines (11),
**characterized in that** a plastic clip (6, 26, 36, 46, 56, 56a, 66, 77, 87) is provided to releasable fasten said at least one function module (4) to the base module (1, 20, 30, 40, 50, 60, 70, 80), said plastic clip (6, 26, 36, 46, 56, 56a, 66, 77, 87) being provided with second connection means (7, 25, 27, 35, 45, 55, 67, 75) that are compatible to said first connection means (2, 21, 22, 31, 41, 51, 52, 62, 64).

2. The installation system according to claim 1,
**characterized in that** the plastic clips (26, 36, 46, 66, 77, 87) are provided with first connection means (21, 22, 41, 51, 52, 62, 64) and/or retaining means (8, 78).

3. The installation system according to claim 2,
**characterized in that** more than one plastic clip (26, 66) are mounted to the base module (20, 60), said more than one plastic clip (26, 66) being mounted one on top of the other.

4. The installation system according to claim 1,
**characterized in that** the at least one function module (4) is releasable fastened to said plastic clip (6, 26, 36, 46, 56, 66, 77, 87) by retaining means 28 (14, 21, 22, 41, 51, 52, 62, 64) of said plastic clip (6, 26, 36, 46, 56, 66, 77, 87).

5. The installation system according to claim 4,
**characterized in that** the first connection means are formed of four central symmetrical quadrant shaped holes (2) and said second connection means are formed of four quadrant shaped legs (7) compatible with said four quadrant shaped holes (2).

6. The installation system according to claim 4,
**characterized in that** the first connection means are formed of a central pin (21) and two laterally opposed walls (22) with each a barbed hook at their ends, said barbed hooks pointing towards each other and said second connection means are formed of a central opening (25) at the bottom of the plastic clip (26) and two barbed recesses (27) in side walls of the plastic clip (26), said first connection means being compatible with said second connection means.

7. The installation system according to claim 4,
**characterized in that** the first connection means are formed of a central opening, two laterally opposed walls (22) with each a barbed hook at their ends and two laterally opposed barbed recesses (31) in the base module (30) and said second connection means are formed of two laterally opposed bottom walls (35) pointing downward from the bottom of the plastic clip (36), with each of the two laterally opposed bottom walls (35) having a barbed hook at their ends, said barbed hooks pointing towards each other and said second connection means having two barbed recesses (37) in side walls of the plastic clip (36), said barbed recesses (37) in the side walls of the plastic clip (36) being compatible with said two laterally opposed walls (22) of the first connection means and said second connection means of two laterally opposed bottom walls (35) being compatible with said two laterally opposed barbed recesses (31) of the first connection means.

8. The installation system according to claim 4,
**characterized in that** the first connection means are formed of a central profiled cylinder (41) and said second connection means are formed of a circular lip (45) inside the circumference of the plastic clip (46) adapted to interact with the central profiled cylinder (41).

9. The installation system according to claim 8,
**characterized in that** the central profiled cylinder (41) is provided with two laterally opposed walls (42) and the circumference of the plastic clip (46) is provided with two laterally opposed notches each pointing downward to the bottom of the plastic clip (46) adapted to accommodate the two laterally opposed walls (42) projecting laterally from the central profiled cylinder (41).

10. The installation system according to claim 8,
**characterized in that** the retaining means are formed alike the first connection means with the central cylinder (41) with the central opening (8) and two lateral opposed walls (42).

11. The installation system according to claim 1,
**characterized in that** the first connection means are formed of a central cylinder (51) with four radial bosses (52) regularly distributed around the circumference of said central cylinder (51) and said second connection means are formed of a central circular opening and four passages (55) regularly distributed around the circumference of a casing of the plastic clip (56a), said first connection means being compatible with said second connection means.

12. The installation system according to claim 11,
**characterized in that** an intermediate clip (56) is provided, said at least one function module (4) is integrated in said plastic clip (56a) and said intermediate clip (56) is mounted between said plastic clip (56a) and the base module (50).

13. The installation system according to claim 11,
**characterized in that** the bosses (52) are inclined towards the circumference of a top surface of the central cylinder (51).

14. The installation system according to claim 4,
**characterized in that** the first connection means are formed of a central cylinder (51) with four radial walls (62, 64) distributed around the circumference of said central cylinder (51), with two opposed walls (64) extending above the central cylinder (51) and said second connection means are formed of a lower ring (65) of the plastic clip (66) with four inner circumferential passages (67) allowing to axially insert said first connection means in order to withhold said first connection means inside said second connection means (62, 64) after rotation of the plastic clip (66).

15. The installation system according to claim 14,
**characterized in that** the retaining means (8) for the function module (4) are formed with a central opening (63) in the central cylinder (51).

16. The installation system according to any of the preceding claims,
**characterized in that** the first connection means is directed rectangular with regard to the attachment contact surface (5) of the base module (1).
